# EUROPEAN PATENT APPLICATION

(11) **EP 4 818 123 A1**
(43) Date of publication of application: **07.10.2026**
(21) Application number: 25168325.6
(22) Date of filing: 03.04.2025
(51) Int. Cl.: C02F 1/00, B01D 24/10, C02F 1/28, C02F 1/42, C02F 1/68, C02F 1/44

(54) **GRAVITY-BASED WATER FILTER**

(71) Applicant: Gopala AG, 8280 Kreuzlingen (CH); LOTUS VITA GmbH & Co. KG, 79206 Breisach am Rhein (DE)
(72) Inventor: WOLF, Michael, 8280 Kreuzlingen (CH)
(74) Representative: Weickmann & Weickmann PartmbB

(57) **Abstract**

This invention relates to gravity-based water filtration systems, and in particular to systems for filtering water for personal consumption.

## Description

### BACKGROUND

This invention relates to gravity-based water filtration systems, and in particular to systems for filtering water for personal consumption.

Gravity-based systems often comprise a hopper that receives a charge of water to be filtered, and a storage tank that collects filtered water. A filtration cartridge connects the hopper and the storage tank, and enables the flow of water through one or more filtration media from the hopper to the storage tank.

In use, the hopper is filled with water, typically common tap water. As water flows from the hopper into the storage tank, it is purified by the filtration media to remove, for example, rust, dust, unpleasant odors, heavy metals, and other impurities or pollutants in the water. The water usually flows from the hopper to the storage tank solely due to gravity, and so the filtration process can take several minutes or longer, depending on the design of the filter, the chambers, etc. As a result, gravity-based water filtration systems are often "batch" processors, as the hopper and storage tank are dimensioned so that the hopper has a smaller capacity than the storage tank. Filtered water can then be drawn from the storage tank as needed, while the hopper can be refilled at any time.

To provide drinking water of high quality, the water is often passed through a filtration cartridge comprising one or multiple filtration elements on its way from the hopper to the storage tank.

Particularly, if a ceramic filter or another filtration element with a small pore size is used in a fixed combination with a filtration element having a higher water permeability, pressure differences may arise within the filtration device thereby reducing the water flow rate during use.

If the filtration cartridge of the device extends into the storage tank and the water level rises counter to the filtration direction and the filtration cartridge upon filling, a counterpressure is generated by the rising water in the storage tank against the gravitational flow of the filtered water within the filtration cartridge. Without pressure equalization, this results in counterpressure within the filtration cartridge, which stops the water flow.

Therefore, the objective of the present invention is to provide a filtration device that prevents undesirable pressure differences within the device and ensures a continuous water flow.

### SUMMARY OF THE INVENTION

A first aspect of the invention relates to a gravity-based water filtration device comprising
- a hopper (12) for receiving unfiltered water,
- a storage tank (16) for collecting filtered water,
- a filtration cartridge (26) comprising at least one filtration element (30, 32) and providing a flow path from the hopper (12) to the storage tank (16), and
- a middle base (28) positioned between the hopper (12) and the storage tank (16), the middle base (28) comprising:
   ∘ a central opening (40) for receiving the filtration cartridge (26),
   ∘ means (42) for supporting the filtration cartridge (26),
   ∘ means (44) for supporting the hopper (12),
   ∘ means (46) for keeping the middle base (28) in position above the storage tank (16) and
   ∘ at least one gap (50) on its lower side extending from the outer edge of the middle base inward to the interior of the storage tank.

A further aspect of the invention relates to a method for purifying water, particularly water for drinking purposes, comprising passing water through a filtration device as described herein.

### BRIEF DESCRIPTION OF THE DRAWINGS

**Figure 1** shows a side view of a gravity-based filtration device of the present invention.
**Figure 2a** shows a view of the upper side of a middle base or adapter of a gravity-based filtration device.
**Figure 2b** shows a view of the lower side of a middle base or adapter of a gravity-based filtration device.

### DETAILED DESCRIPTION

According to the present invention, a gravity-based water filtration device is provided. The device comprises at its top a hopper for receiving unfiltered water, at its bottom a storage tank for collecting filtered water, a filtration cartridge and a middle base positioned between the hopper and the storage tank. Typically, the hopper and the storage tank comprise circumferential side walls. In certain embodiments, the hopper comprises a lid for coverage. The volume of the hopper may vary to great extent, but often may be about 1 l to about 20 l. In certain embodiments, the storage tank has a faucet for withdrawing water. The volume of the storage tank may vary to great extent, but often is about 1 l to about 100 l. The hopper and the storage tank may be made from a transparent material, e.g., glass or plastic. In certain embodiments, the device is placed on a rack, e.g. a tripod.

The middle base of the device may be substantially disc-shaped and has an upper side and a lower side. Typically, the diameter of the middle base is in the range of about 10 cm to about 50 cm. The middle base is mounted on the storage tank and comprises means on its lower side, e.g., limiter elements protruding downward from the lower side, for keeping the middle base in position, e.g., in a centered position, above the storage tank. In certain embodiments, the limiter elements contact the upper rim of the circumferential sidewall of the storage tank. The outer edge of the middle base may be flush with the outside walls of the hopper and the storage tank.

The middle base comprises means on its upper side for supporting the hopper, e.g., a plurality of raised mounts, e.g., three raised mounts, on which the hopper is placed and kept in position, e.g., in a centered position above the middle base.

The middle base is adapted for receiving and supporting the filtration cartridge which comprises at least one filtration element. The filtration cartridge is inserted in a central opening of the middle base and thereby provides a flow path from the hopper to the storage tank. The middle base comprises means for supporting the filtration cartridge, e.g., an annular support element around the central opening on which a protrusion extending from the filtration cartridge may be placed.

According to the present invention, the middle base comprises at least one gap on its lower side extending from the outside of the device inward and reaching the interior of the storage tank, particularly reaching the air volume above the water level in the storage tank. In certain embodiments, the middle base comprises a plurality of gaps, e.g. 3 gaps. By means of the gap or the gaps, pressure equalization between the interior of the storage tank, e.g., the air volume above the water level in the storage tank, and the outside of the device is provided.

In certain embodiments, the middle base further comprises an upward extending outer edge as protection against an overflow of water in case the filtration cartridge is clogged or closed for other reasons.

In certain embodiments, the filtration cartridge of the device comprises a plurality of different filtration elements., e.g. a first filtration element for receiving unfiltered water from the hopper and a second filtration element for receiving water from the first filtration element.

When the cartridge is in use, water first passes through the first filtration element and then through the second filtration element. Particularly in case of different water permeabilities of the first and second filtration elements, a pressure difference may arise within the device. According to the present invention, pressure equalization is provided by the gaps on the lower side of the middle base extending form the storage tank to the outside of the device. Thereby, a smooth operation of the filtration cartridge is enabled where the water flow rate through the cartridge is not negatively affected by the build-up of pressure differences.

In particular embodiments, the water permeability of first filtration element is lower than the water permeability of the second filtration element. For example, the water permeability of the first filtration element is at least two times lower and particularly at least three times lower than the water permeability of the second filtration element.

In certain embodiments, the first filtration element is removably attached to the filtration cartridge and can be tightly fitted to the cartridge body via a holder provided on the cartridge body. In particular embodiments, the first filtration element is fitted to the holder via a flexible seal as described in detail below.

The first filtration element may comprise a microporous filter which is suitable for removing undissolved substances from water. The pore size may be about 100 µm or less, particularly about 0.1 to about 50 µm and more particularly about 0.4 to about 20 µm, e.g. about 10 µm. The first filtration element may be e.g., a ceramic filter, an ultrafiltration membrane or a micro sponge. In even more particular embodiments, the first filtration element is a ceramic filter.

The first filtration element may be adapted for being tightly fitted to a holder which is provided at the top of the cartridge body. Typically, the holder is an integral portion of the cartridge body.. In particular embodiments, the first filtration element is adapted to be tightly fitted to the holder via a flexible seal which is a part separate from the cartridge body. The flexible seal may be made from any suitable flexible material which is compatible with drinking water. For example, the flexible seal is a flexible silicone, rubber, or latex seal, more particularly a flexible silicone seal.

The flexible seal is kept in its predetermined position by the holder. For this purpose, the holder which may comprise one or several protrusions extending from the upper portion of the sidewall directed inwardly.

In particular embodiments, the flexible seal is formed as an integral structure comprising a first sub-structure adapted to be placed on the holder and a second sub-sub-structure adapted to be tightly fitted to the first filtration element. In certain embodiments, the first sub-structure is formed as a base having an opening for providing water flow from the first filtration element to the pressure equalization chamber below. In certain embodiments, the second sub-structure comprises at least one lip, e.g. an outer lip and an inner lip circumferentially extending upward from the base such the first filtration element can be tightly fitted to the at least one lip, e.g., between the outer and the inner flexible lip. A lip, e.g., the outer lip may be provided with openings to allow water flow into the first filtration element.

The second filtration element may comprise one or several materials suitable for water purification. In certain embodiments, the second filtration element is positioned within the filtration cartridge. The chamber is defined by suitable support structures, e.g., horizontal water-permeable support structures above and below the second filtration element and optionally at least one vertical support structure.

The second filtration element may comprise one or several filter materials selected from the group comprising an adsorbent including activated carbon, silver-impregnated activated carbon, zeolite and diatomaceous earth, an ion exchanging resin including an anion exchanging resin, a cation exchanging resin and a mixed bed resin, a mineralization media including calcium carbonate, e.g., dolomite, limestone and/or marble, magnesium oxide, and sintered glass, a metal-based filter medium including KDF-55 (copper-zinc alloy) and manganese greensand, a bio-ceramic material including FIR ceramic, tourmaline, alkaline ceramic and EM ceramic and a natural filtering material including quartz sand, active sand and clay filter granules, and any combination thereof.

In certain embodiments, the second filtration element may comprise two or more separate layers of different materials, e.g., different filter materials. In such embodiments, the chamber of the second filtration element may comprise several individual compartments, particularly in horizontal arrangement wherein the individual compartments may comprise different materials, e.g., different filter materials. The individual compartments may be separated by water-permeable horizontal support structures and optionally held by vertical support structures. For example, the chamber of the second filtration element may comprise an upper compartment and a lower compartment separated by a water-permeable support structure. In certain embodiments, the lower compartment may comprise a water-enriching element, e.g., a mineralization element.

The device is particularly useful for purifying water for drinking purposes.

Further, a method for purifying water is provided, comprising passing water through a device as described above and collecting the purified water in the storage tank. Particularly, the water is water for drinking purposes.

In the following, certain embodiments of the invention shall be explained in more detail by reference to the enclosed Figures, however without being limited thereto

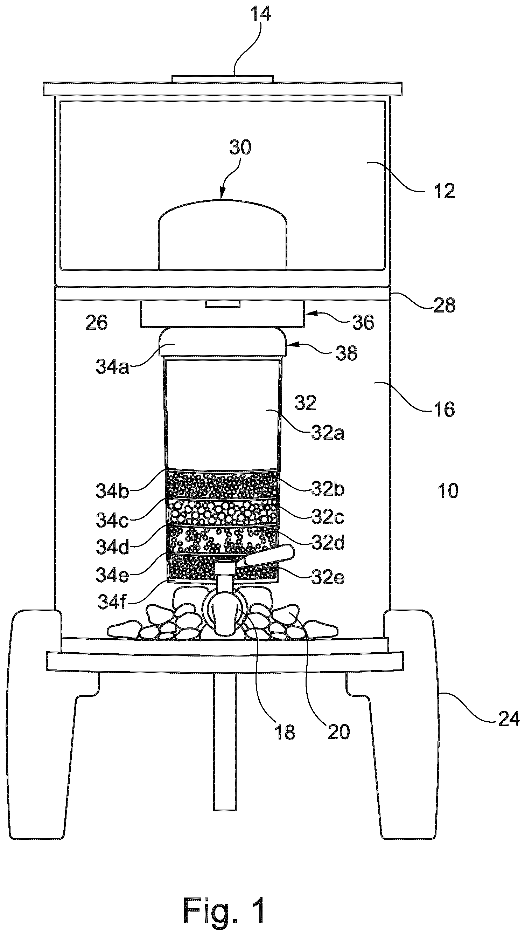

**Figure 1** shows a side view of a gravity-based filtration device (10) of the present invention. The device comprises a hopper (12) into which unfiltered water is filled in. The hopper (12) may comprise at its top a lid (14) for coverage. Further, the device comprises a storage tank (16) for collecting filtered water. The storage tank (16) may comprise a faucet (18) for withdrawing water. Within the storage tank (16), water stones (20), e.g., water gemstones may be placed for enhancing water quality. The device (10) may be positioned on a rack (24).

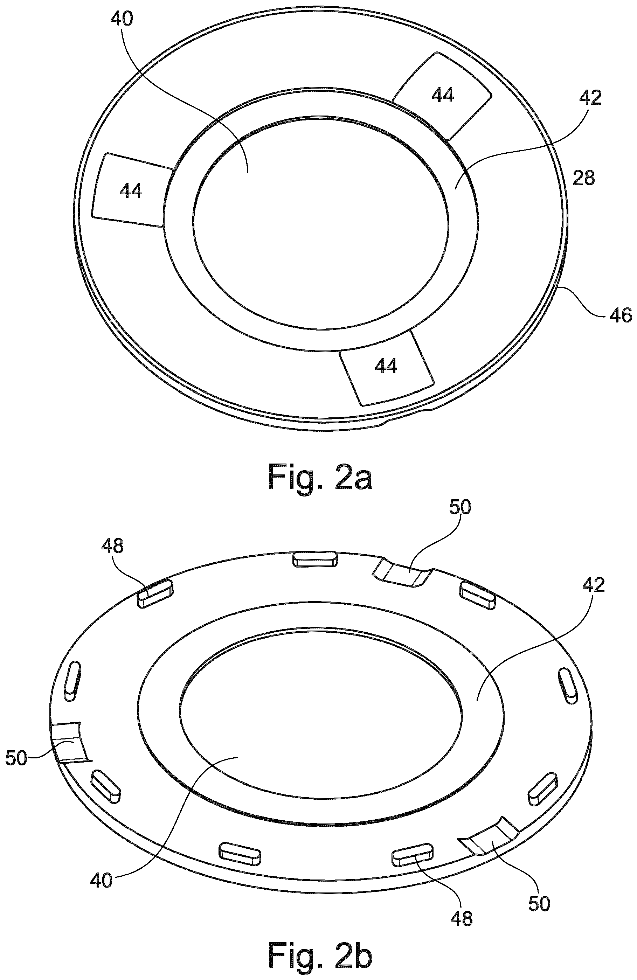

The flow path for water from the hopper (12) to the storage tank (16) is provided by a filtration cartridge (26) comprising one or more filtration elements. The filtration cartridge is supported by a middle base (28) that is positioned between the hopper (12) and the storage tank (16) and may have a disc like-shape. The outer edge of the middle base (28) may be flush with the outside walls of the hopper (12) and the storage tank (16). A detailed view of the middle base is shown *infra* in Figures 2a and 2b.

In the depicted embodiment, the filtration cartridge (26) comprises a first filtration element (30) that is the uppermost filtration element of the cartridge and receives unfiltered water. In certain embodiments, the first filtration element (30) can be removably attached to the filtration cartridge (26), e.g., via a flexible seal, particularly a silicone seal. In particular embodiments, the first filtration element (30) is a microporous filter, e.g., a ceramic filter.

In the depicted embodiment, the filtration cartridge (26) further comprises a second filtration element (32) for receiving water from the first filtration element (14). The second filtration element (32) may be positioned in a chamber within the filtration cartridge (26) and may comprise several layers of different filter materials (32a, 32b, 32c, 32d, 32e). The individual layers may be defined by horizontal water-permeable support structures (34a, 34b, 34c, 34d, 34e, 34f) and the sidewall of the filtration cartridge (26). In particular embodiments, the water permeability of first filtration element 30) is lower than the water permeability of the second filtration element (32).

The filtration cartridge (26) is adapted to be kept in place within the filtration device by a holding element (36) providing a support to the middle base (28). The connection between the supporting element (36) and the filtration cartridge (26) may comprise a thread (38).

**Figures 2a and 2b** show the details of the middle base (28) positioned as an adapter between the hopper and the storage tank. In **Figure 2a** the upper side of the middle base is depicted. The middle base (28) comprises a central opening (40) adapted for receiving the filtration cartridge and optionally means for supporting the fi to provide connection with the filtration cartridge (not shown)

The upper side of the middle base (28) is provided with means for supporting the hopper and may comprise a plurality of raised mounts, e.g., three mounts (44) on which the hopper is placed. The middle base (28) may further comprise an upward extending outer edge (46) as protection against an overflow of water in case the filtration cartridge is clogged or closed for other reasons. Due to the outer edge (46), any water on the upper surface of the middle base will pass from there (unfiltered) into the storage tank.

In **Figure 2b** the lower side of the middle base is depicted. The central opening (40) and the annular support element (42) are shown. Protruding from the lower side of the middle base (28) are means, e.g., limiter elements (48) for keeping the middle base (28) in position, e.g., in a centered position above the storage tank. Typically, the limiter elements (48) will be positioned to the inside and in contact with the upper rim of the circumferential sidewall of the storage tank when the device is set up.

Further, the lower side of the middle base (28) comprises gaps (50) extending from the outer edge of the middle base inward to the interior of the storage tank, particularly to the air volume above the water level in the storage tank. The length of the gaps in the inward direction is greater than the thickness of the circumferential sidewall of the storage tank and typically between about 0.5 cm and about 1 cm. In the depicted embodiment, the gaps extend inward beyond the limiter elements (48). These gaps are air channels for providing pressure equalization between the interior of the storage tank, e.g., the air volume above the water level in the storage tank, and the outside of the device.

## Claims

1. A gravity-based water filtration device comprising
- a hopper (12) for receiving unfiltered water,
- a storage tank (16) for collecting filtered water,
- a filtration cartridge (26) comprising at least one filtration element (30, 32) and providing a flow path from the hopper (12) to the storage tank (16), and
- a middle base (28) positioned between the hopper (12) and the storage tank (16), the middle base (28) comprising:
o a central opening (40) for receiving the filtration cartridge (26),
o means (42) for supporting the filtration cartridge (26),
o means (44) for supporting the hopper (12),
o means (46) for keeping the middle base (28) in position above the storage tank (16) and
∘ at least one gap (50) on its lower side extending from the outer edge inward to the interior of the storage tank.

2. The device of claim 1, wherein the middle base (28) is substantially disc-shaped.

3. The device of claim 1 or 2, wherein the middle base (28) has a diameter of about 10 cm to about 50 cm.

4. The device of any one of claims 1-3, wherein the means (42) for supporting the filtration cartridge comprises an annular support element around the central opening (40) of the middle base.

5. The device of any one of claims 1-4, wherein the middle base (28) further comprises an upward extending outer edge (46).

6. The device of any one of claims 1-5, wherein the storage tank (16) has a volume of about 1 l to about 100 l.

7. The device of any one of claims 1-6, wherein the storage tank (16) comprises a faucet.

8. The device of any one of claims 1-7, which is positioned on a rack (24).

9. The device of any one of claims 1-8, wherein the filtration cartridge (26) comprises a plurality of different filtration elements (30, 32).

10. The device of claim 9, wherein the filtration cartridge (26) comprises a first filtration element (30) for receiving unfiltered water from the hopper and a second filtration element (32) for receiving water from the first filtration element, wherein the water permeability of first filtration element (30) is lower than the water permeability of the second filtration element (32).

11. The device of claim 10, wherein the first filtration element (30) comprises a microporous filter having a pore size of about 100 µm or less, particularly about 0.1 to about 50 µm and more particularly about 0.4 to about 20 µm, e.g. about 10 µm.

12. The device of claim 10 or 11, wherein the first filtration element (30) is a ceramic filter.

13. The device of any one of claims 10-12, wherein the first filtration element (30) is attached to the filtration cartridge (26) via a flexible seal, particularly via a flexible silicone seal.

14. A method for purifying water, particularly water for drinking purposes, comprising passing water through a filtration device of any one of claims 1-13 and collecting the filtered water.
